# EUROPEAN PATENT APPLICATION

(11) **EP 4 089 575 A1**
(43) Date of publication of application: **16.11.2022**
(21) Application number: 21829356.1
(22) Date of filing: 21.05.2021
(51) Int. Cl.: G06K 9/00

(54) **TERMINAL CONTROL METHOD AND APPARATUS, AND TERMINAL AND STORAGE MEDIUM**

(30) Priority: 23.06.2020 CN 202010581047
(71) Applicant: ZTE Corporation, Shenzhen, Guangdong 518057 (CN)
(72) Inventor: LI, Zhengyi, Shenzhen, Guangdong 518057 (CN)
(74) Representative: Bals & Vogel Patentanwälte PartGmbB
(86) International application number: PCT/CN2021/095274
(87) International publication number: WO 2021/258948

(57) **Abstract**

A terminal control method and apparatus, and a terminal and a storage medium. Before a terminal formally identifies an eye movement instruction of a user and executes same, an eye movement verification step is preset, and only when eye movement verification is passed, the terminal performs an operation according to the subsequent eye movement instruction. A change in the distance between eyelids is also calculated to identify various types of blink movements, and a change in the proportion of a pupil area is calculated to identify a gaze movement or a sight diversion movement.

## Description

### CROSS-REFERENCE TO RELATED APPLICATION

This application is filed on the basis of Chinese patent application No. 202010581047.7 filed on June 23, 2020, and claims priority to the Chinese patent application, the entire contents of which are incorporated herein by reference.

### TECHNICAL FIELD

Embodiments of the present application relate to, but not limited to, the technical field of terminals, and more particularly, relate to a terminal control method and apparatus, a terminal, and a storage medium.

### BACKGROUND

Different from terminal control methods based on touch control and voice control, a terminal control method based on user eye actions is simpler and more convenient and is suitable for a variety of application scenarios. In the current terminal control method based on eye actions, after a user enables a control function, a terminal continuously collects, through a camera, eye actions of the user, for example, blink or a change in a sight direction, compares a collected eye image with stored eye images, judges an eye action intent of the user, and then performs a terminal operation corresponding to the eye action intent. However, when the user does not need to use eye actions to control the terminal, the terminal may continue to collect the user's eye actions in the control method, leading to terminal operations that do not meet the user's intent and reducing efficiency of the user's control over the terminal.

### SUMMARY

The following is an overview of the subject matters described in detail herein. The overview is not intended to limit the protection scope of the claims.

According to some embodiments of the present application, a terminal control method and apparatus, a terminal, and a storage medium are provided.

In accordance with an aspect of the present application, an embodiment provides a terminal control method. The method includes: generating a first signal according to a first eye action in response to that the first eye action matches at least one of preset first eye actions; generating a second signal according to a second eye action after acquiring the first signal in response to that the second eye action matches at least one of preset second eye actions; and performing a preset terminal operation according to the second signal. That is, the terminal judges, according to the first eye action acquired, whether verification is passed; and performs an operation after verification according to the second eye action acquired.

In accordance with another aspect of the present application, an embodiment provides a terminal control apparatus configured to perform the terminal control method described above.

In accordance with another aspect of the present application, an embodiment further provides a terminal, including at least: an image collection apparatus configured to collect an eye action image; a timing apparatus configured to determine a collection cycle of the eye action image; a memory configured to store a computer program which, when executed by a processor, causes the processor to implement the method described above; a processor configured to implement the method described above in response to executing the computer program; and a power supply configured to power the terminal.

In accordance with another aspect of the present application, an embodiment further provides a computer-readable storage medium storing computer-executable instructions which, when executed by a processor, cause the processor to perform the method described above.

Other features and advantages of the present application will be set forth in part in the specification which follows and in part will become apparent from the specification or may be learned from practice of the present application. The objectives and other advantages of the present application may be realized and attained by the structure particularly pointed out in the specification, claims and the accompanying drawings.

### BRIEF DESCRIPTION OF DRAWINGS

FIG. 1 is a schematic flowchart of a terminal control method according to an embodiment of the present application;
FIG. 2 is a schematic flowchart of the terminal control method according to another embodiment of the present application;
FIG. 3 is a schematic diagram of an eye action verification process in the terminal control method according to an embodiment of the present application;
FIG. 4 is a schematic diagram of an eye action control process in the terminal control method according to an embodiment of the present application;
FIG. 5 is a schematic diagram of a blink identification process according to another embodiment of the present application;
FIG. 6 is a schematic diagram of a rapid blink identification process according to another embodiment of the present application;
FIG. 7 is a schematic diagram of a gaze identification process according to another embodiment of the present application;
FIG. 8 is a schematic diagram of a sight diversion identification process according to another embodiment of the present application;
FIG. 9 is a schematic flowchart of a terminal control method according to an embodiment of the present application;
FIG. 10 is a schematic flowchart of the terminal control method according to another embodiment of the present application; and
FIG. 11 is a schematic diagram of modules of a terminal according to another embodiment of the present application.

### DETAILED DESCRIPTION

In order to make objectives, technical schemes and advantages of the present application clearer, the present application is described in further detail below with reference to the drawings and embodiments. It is to be understood that specific embodiments described herein are intended only to explain and not to limit the present application.

It is to be noted that, although the division of functional modules is performed in the schematic diagram of the apparatus and a logic order is shown in the flowchart, in some cases, the shown or described steps may be executed by a different module division than in the apparatus or in a different order than shown in the flowchart. Terms such as "first" and "second" used in the specification, claims and the drawings are intended to distinguish similar objects, but are not intended to describe a specific sequence or precedence order.

In the description of the embodiments of the present application, unless otherwise explicitly defined, the terms "set", "mount", "connect" and so on shall be understood broadly. Those having ordinary skill in the art can reasonably determine specific meanings of the above terms in the embodiments of the present application in combination with specific content of the technical schemes.

The terminal control by touch control and voice control has been mature, but the terminal control by eye actions is still in its infancy. The principle of the terminal control by eye actions is to continuously collect a user's eye action through a camera or sensor and, compare a collected eye image with stored eye images, identify the user's eye action, and control the terminal to perform a terminal operation corresponding to the eye action. However, when the user may does not need to use eye actions to control the terminal, the terminal may continue to collect the user's eye action information in the control method, leading to terminal operations that do not meet the user's intent and reducing efficiency of the user's control over the terminal.

Based on the above, according to some embodiments of the present application, a terminal control method and apparatus, a terminal, and a storage medium are provided. An eye action verification step is preset, and the terminal performs an operation according to a subsequent eye action instruction only when eye action verification is passed, which reduces wrong operations caused by the user's wrong eye actions and improves the efficiency of the user's control over the terminal.

The embodiments of the present application are further illustrated below with reference to the drawings.

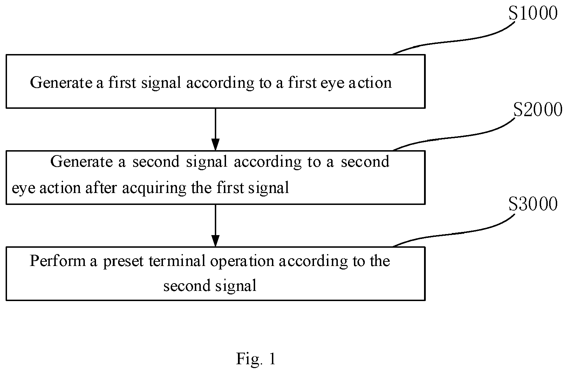

In accordance with an aspect of the present application, an embodiment provides a terminal control method. FIG. 1 is a schematic flowchart of a terminal control method according to an embodiment of the present application. As shown in FIG. 1, the terminal control method according to the embodiment includes at least following steps.

At step S1000, a first signal is generated according to a first eye action.

A terminal begins to continuously collect a user's eye action after an eye action identification function of the terminal is enabled. The eye action in this step is equivalent to a verification action. The terminal can generate the first signal only when the eye action collected and identified by the terminal matches a preset eye action for activation.

In an embodiment, the first signal is used to control the terminal to enter a subsequent eye action control process.

At step S2000, a second signal is generated according to a second eye action after acquiring the first signal.

When the first eye action for activation is identified and matches the preset eye action, the terminal can acquire the first signal. The terminal continuously collects the user's eye action based on the first signal acquired. The eye action in this step is equivalent to an operation instruction action. The terminal can generate the second signal only when the eye action collected and identified by the terminal matches a preset terminal operation instruction action.

In an embodiment, the second signal is used to control the terminal to perform an operation corresponding to the user's eye action.

At step S3000, a preset terminal operation is performed according to the second signal.

In the terminal control method according to this embodiment, an eye action verification step is preset, and the terminal performs an operation according to a subsequent eye action instruction only when eye action verification is passed, which reduces wrong operations caused by the user's wrong eye actions and improves the efficiency of the user's control over the terminal.

The preset terminal operation may be all operations that can be performed on the terminal, such as powering on and off, opening and using apps, making phone calls, changing settings, and recording and capturing screens. Those having ordinary skill in the art should know that, in theory, all terminal operations can correspond to eye action instructions. That is, the terminal operations are performed through the second signal.

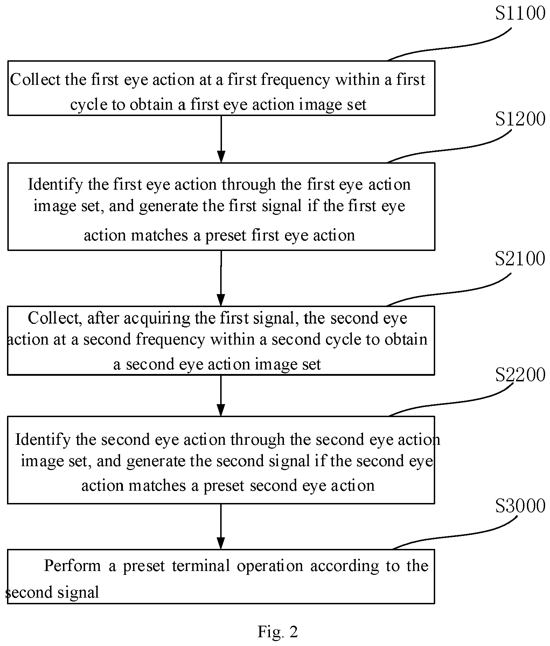

FIG. 2 is a schematic flowchart of the terminal control method according to another embodiment of the present application. As shown in FIG. 2, the terminal control method includes at least following steps.

At step S 1100, the first eye action is collected at a first frequency within a first cycle to obtain a first eye action image set.

A timeout cycle of a timer is set, and the timer is initialized and started. The timeout cycle of the timer may be built in a terminal program or set according to a user requirement. The terminal has a camera or other sensor apparatuses that can be configured to sample eye actions, which can sample the user's eye actions at a certain sampling frequency and obtain an eye action image set.

At step S1200, the first eye action is identified through the first eye action image set, and the first signal is generated if the first eye action matches a preset first eye action.

An eye action is identified based on the eye action image set obtained in the previous step, and the first signal is generated if the identified eye action matches a preset eye action, which indicates that the verification is successful.

It is to be noted that the preset eye action may be a unique eye action or an eye action set, that is, multiple preset eye actions. The verification can be passed provided that the identified eye action can match one of the preset eye actions.

At step S2100, after acquiring the first signal, the second eye action is collected at a second frequency within a second cycle to obtain a second eye action image set.

When the first eye action for activation is identified and matches the preset eye action, the terminal can acquire the first signal. The terminal continuously collects the user's eye action based on the first signal acquired. A timeout cycle of a timer is set, and the timer is initialized and started. The timeout cycle of the timer may be built in a terminal program or set according to a user requirement. The terminal has a camera or other sensor apparatuses that can be configured to sample eye actions, which can sample the user's eye actions at a certain sampling frequency and obtain an eye action image set.

At step S2200, the second eye action is identified through the second eye action image set, and the second signal is generated if the second eye action matches a preset second eye action.

An eye action is identified based on the eye action image set obtained in the previous step, and the second signal is generated if the identified eye action matches a preset eye action. The second signal is used to control the terminal to perform an operation corresponding to the user's eye action, that is, a preset terminal operation.

It is to be noted that the preset eye action may be a unique eye action or an eye action set, that is, multiple preset eye actions. The verification can be passed provided that the identified eye action can match one of the preset eye actions.

At step S3000, a preset terminal operation is performed according to the second signal.

In the above embodiment, by collecting the user's eye actions, the terminal first passes an eye action verification process and then enters an eye action control process, which can effectively prevent terminal misoperation caused by the user's wrong eye actions.

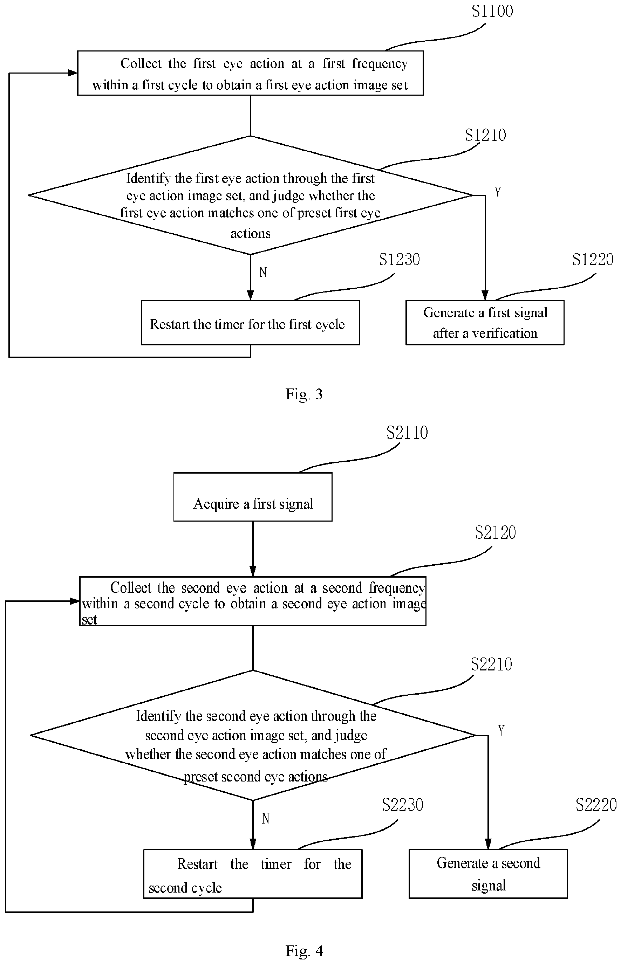

FIG. 3 is a schematic diagram of an eye action verification process in the terminal control method according to an embodiment of the present application. As shown in FIG. 3, the terminal control method includes at least following steps.

At step S 1100, the first eye action is collected at a first frequency within a first cycle to obtain a first eye action image set.

A timeout cycle of a timer is set to T₁, and the timer is initialized and started. The timeout cycle T₁ of the timer may be built in a terminal program or set according to a user requirement. The terminal has a front camera. The front camera samples the user's eye actions at a sampling frequency f₁, and obtains an eye action image set S₁.

In an embodiment, the timeout cycle T₁ of the timer in the terminal is set to 1 s, the terminal has a front camera, and the sampling frequency f₁ of the front camera is 10 times/s. That is, the user's eye actions are collected 10 times per second, to form an eye action image set S₁ including 10 eye action images.

At step S1210, the first eye action is identified through the first eye action image set, and it is judged whether the first eye action matches a preset first eye action.

In an embodiment, the preset eye action is blink. If the eye action is identified as blink according to the eye action image set, the identified eye action matches the preset eye action. In this case, step S1220 is performed.

At step S1220, a first signal is generated.

In an embodiment, the first signal is used to control the terminal to enter a subsequent eye operation instruction identification and judgment process.

In an embodiment, the preset eye action is left-eye blink. If the eye action is identified as binocular blink according to the eye action image set, the identified eye action does not match the preset eye action. In this case, step S1230 is performed.

At step S1230, the timer is restarted for the first cycle.

The timer being restarted for the cycle means that the timer is reset, and the entire terminal control process such as eye action collection, identification, and judgment is performed again.

In the above embodiment, by collecting the user's eye actions, the terminal can judge whether an identified eye action matches a preset eye action, verification can be passed only when the identified eye action matches the preset eye action, and then a subsequent terminal control process is entered, which can effectively prevent terminal misoperation caused by the user's wrong eye actions.

FIG. 4 is a schematic diagram of an eye action control process in the terminal control method according to an embodiment of the present application. As shown in FIG. 4, the terminal control method according to the embodiment includes at least following steps.

At step S2110, a first signal is acquired.

In an embodiment, the first signal is a first signal generated by a terminal after the eye action verification process is passed. After the step, an eye action control process is entered.

At step S2120, the second eye action is collected at a second frequency within a second cycle to obtain a second eye action image set.

A timeout cycle of a timer is set to T₂, and the timer is initialized and started. The timeout cycle T₂ of the timer may be built in a terminal program or set according to a user requirement. The terminal has a front camera. The front camera samples the user's eye actions at a sampling frequency f₂, and obtains an eye action image set S₂.

In an embodiment, the timeout cycle T₂ of the timer in the terminal is set to 1 s, the terminal has a front camera, and the sampling frequency f₂ of the front camera is 10 times/s. That is, the user's eye actions are collected 10 times per second, to form an eye action image set S₂ including 10 eye action images.

At step S2210, the second eye action is identified through the second eye action image set, and it is judged whether the second eye action matches one of preset second eye actions.

In an embodiment, the preset eye actions include gaze, looking left, looking right, looking up, and looking down. If the eye action is identified as gaze according to the eye action image set, the eye action matches the preset eye action, and step S2220 is performed. If the identified eye action is blink, the blink action cannot match any action in a preset eye action set, and step S2230 is performed.

At step S2220, a second signal is generated.

In an embodiment, the second signal is used to control the terminal to perform an operation corresponding to the user's eye action.

In an embodiment, the preset eye action is looking up, so as to operate the terminal to swipe up a page.

At step S2230, the timer is restarted for the second cycle.

The timer being restarted for the cycle means that the timer is reset, and the entire terminal control process such as eye action collection, identification, and judgment is performed again.

In the above embodiment, after the user is authenticated by the terminal, the terminal continuously collects the user's eye actions to judge whether an identified eye action matches a preset eye action, so as to realize the control over the terminal, which can effectively prevent terminal misoperation caused by the user's wrong eye actions.

A current common eye action identification method involves pre-collecting a user's eye action and storing the eye action as a standard reference action, comparing the collected eye action with the pre-stored standard reference action in an actual identification and judgment process of the eye action, and then judging whether the eye action is a preset eye action. However, this method involves image comparison, and thus may have high computational complexity, which may reduce the efficiency of the user's control over the terminal.

An eyelid is located in front of an eyeball, divided into an upper eyelid and a lower eyelid. A change in a distance between the eyelids can reflect a change in an eye action. Normal people blink instinctively. Generally, two eyes blink at the same time, and each blink duration generally ranges from 0.2 s to 0.4 s. However, in eye-action-based human-computer interaction, unconscious blink may trigger a corresponding terminal operation, resulting in misoperation. Compared with the simultaneous blink of two eyes, monocular blink is generally an active behavior controlled by the user, which may not be easily made to trigger a terminal operation by mistake. Therefore, setting the monocular blink action as a verification action or control action can effectively prevent misoperation, and at the same time, the terminal should be capable of accurately identifying the monocular blink action.

In this embodiment, a binocular blink action identification process is provided.

In an embodiment, a distance change set of upper and lower eyelids of a left eye and a distance change set of upper and lower eyelids of a right eye are first acquired respectively through an eye action image set. Taking the left eye as an example, a distance between upper and lower eyelids in each image of the image set is first extracted, a distance between the eyelids when the user opens the eyes normally is obtained, and distances between the eyelids in other images are calculated according to the distance between the eyelids when the eyes are opened normally. Such calculation may be simple difference calculation or normalization calculation, or involve other algorithms and generation of a more complex eyelid distance change matrix, with a purpose of generating, according to different eye features of the user, data that can reflect changes in the eye actions. The distance when the eyes are opened normally may be calculated or obtained during user initialization on a terminal device.

In some examples, it is judged whether the distance change set of the upper and lower eyelids of the left eye and the distance change set of the upper and lower eyelids of the right eye each include at least one value greater than a first blink threshold. If the distance change set of the upper and lower eyelids of the left eye and the distance change set of the upper and lower eyelids of the right eye each include at least one value greater than the blink threshold, it indicates that the two eyes are closed, and the eye action is judged as binocular blink.

In another embodiment, a monocular blink identification process is provided.

In another embodiment, firstly, a distance change set of upper and lower eyelids of a left eye and a distance change set of upper and lower eyelids of a right eye are acquired respectively through an eye action image set. Then, it is judged whether the distance change set of the upper and lower eyelids of the left eye includes at least one value greater than a first threshold and all values in the distance change set of the upper and lower eyelids of the right eye are less than the first threshold. If the distance change set of the upper and lower eyelids of the left eye includes at least one value greater than the blink threshold, it indicates that the left eye blinks, and if all the values in the distance change set of the upper and lower eyelids of the right eye are less than the first threshold, it indicates that the right eye does not blink, so it may be judged that only the left eye blinks.

A method for judging right-eye blink is the same as that for the left eye. Details are not described herein.

In yet another embodiment, a binocular rapid blink identification process is provided.

In yet another embodiment, firstly, a distance change set of upper and lower eyelids of a left eye and a distance change set of upper and lower eyelids of a right eye are acquired respectively through an eye action image set. Further, it is judged whether the distance change set of the upper and lower eyelids of the left eye and the distance change set of the upper and lower eyelids of the right eye each include at least one value greater than a second blink threshold. If the distance change set of the upper and lower eyelids of the left eye and the distance change set of the upper and lower eyelids of the right eye each include at least two values greater than the blink threshold, it indicates that the two eyes are closed at least twice in a determined cycle, and the eye action is judged as binocular rapid blink.

In the above embodiment, distance change data of upper and lower eyelids in an eye action image collected is obtained and compared with a preset threshold to identify the user's binocular blink action, monocular blink action, and binocular rapid blink action. Compared with the existing method for judging an eye action by comparing a collected image with a reference image, the eye action identification process according to this embodiment can reduce complexity of the algorithm and reduce the amount of computation of the terminal, can effectively speed up eye action identification performed by the terminal, and improve the efficiency of the control over the terminal.

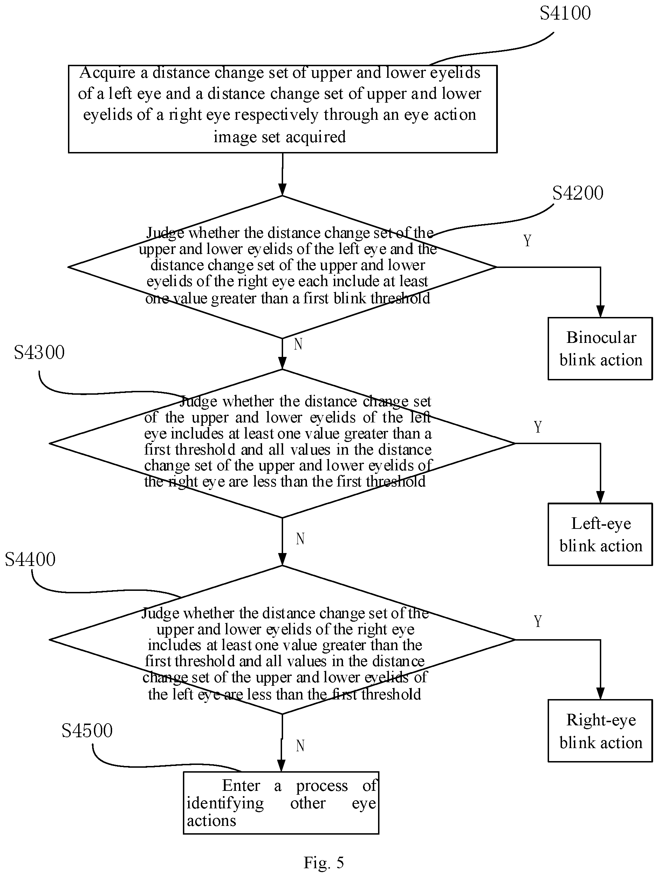

Based on the above, FIG. 5 is a schematic diagram of a blink identification process according to another embodiment of the present application. As shown in FIG. 5, the blink identification process according to the embodiment includes at least following steps.

At step S4100, a distance change set of upper and lower eyelids of a left eye and a distance change set of upper and lower eyelids of a right eye are acquired respectively through an eye action image set acquired.

In both the verification process and the control process, the terminal collects the user's eye actions through a camera or other sensor apparatuses that can be used to sample the eye actions. In this embodiment, the terminal collects the user's eye action image information through a front camera.

A timeout cycle of a timer in the terminal is set to T₁. In an embodiment, T₁ is 1 s, which is a built-in parameter of a terminal program. The timer is initialized and started. The front camera samples the user's eye actions at a sampling frequency f₁. In an embodiment, the sampling frequency f₁ is 10 times/s, that is, the user's eye actions are collected 10 times per second, and an eye action image set S₁ is obtained. At the end of each timeout cycle, the image set S₁ includes 10 eye action images of the user.

According to the eye action image set acquired, changes in distances between upper and lower eyelids of the left eye and the right eye of each image in the image set are acquired respectively to form a distance change set of the upper and lower eyelids of the left eye and a distance change set of the upper and lower eyelids of the right eye. Taking the left eye as an example, the distance change set of the upper and lower eyelids is obtained by acquiring the distance between the upper and lower eyelids in each eye action image.

In this embodiment, still taking the left eye as an example, a distance between upper and lower eyelids in each image is first extracted, a distance between the eyelids when the user opens the eyes normally is obtained, and distances between the eyelids in other images are calculated according to the distance between the eyelids when the eyes are opened normally. Such calculation may be simple difference calculation or normalization calculation, or involve other algorithms and generation of a more complex eyelid distance change matrix, with a purpose of generating, according to different eye features of the user, data that can reflect changes in the eye actions. The distance when the eyes are opened normally may be calculated or obtained during user initialization on a terminal device.

A method for acquiring the distance change set of the upper and lower eyelids of the right eye is the same as that for the left eye. Details are not described herein.

At step S4200, it is judged whether the distance change set of the upper and lower eyelids of the left eye and the distance change set of the upper and lower eyelids of the right eye each include at least one value greater than a first blink threshold.

In an embodiment, the distance between the eyelids when the eyes are opened normally is taken as a reference value to acquire a distance between the eyelids when the eyes are not opened normally, i.e., a distance between the eyelids during an eye action, and a ratio of a change in the distance to the reference value is calculated. In the case of blink, the distance between the eyelids may definitely become short, and even the distance between the upper and lower eyelids is zero. However, due to the limitation of an acquisition frequency of the camera, an image in which the distance between the upper and lower eyelids is zero, that is, an image in which two eyes are closed, may not be exactly collected. Therefore, a particular blink threshold is set, and it is judged whether the distance change set of the upper and lower eyelids of the left eye and the distance change set of the upper and lower eyelids of the right eye each include at least one value greater than the blink threshold.

In some examples, if the distance change set of the upper and lower eyelids of the left eye and the distance change set of the upper and lower eyelids of the right eye each include at least one value greater than the blink threshold, it indicates that the two eyes are closed, and the eye action is judged as binocular blink. Otherwise, step S4300 is performed.

At step S4300, it is judged whether the distance change set of the upper and lower eyelids of the left eye includes at least one value greater than a first threshold and all values in the distance change set of the upper and lower eyelids of the right eye are less than the first threshold.

Similar to the blink judgment principle in the previous embodiment, if the distance change set of the upper and lower eyelids of the left eye includes at least one value greater than a blink threshold, it indicates that the left eye blinks, and if all the values in the distance change set of the upper and lower eyelids of the right eye are less than the first threshold, it indicates that the right eye does not blink, so it may be judged that only the left eye blinks.

At step S4400, it is judged whether the distance change set of the upper and lower eyelids of the right eye includes at least one value greater than the first threshold and all values in the distance change set of the upper and lower eyelids of the left eye are less than the first threshold.

Similar to the blink judgment principle in the previous embodiment, if the distance change set of the upper and lower eyelids of the right eye includes at least one value greater than the blink threshold, it indicates that the right eye blinks, and if all the values in the distance change set of the upper and lower eyelids of the left eye are less than the first threshold, it indicates that the left eye does not blink, so it may be judged that only the right eye blinks.

At step S4500, a process of identifying other eye actions is entered.

If none of the judgment conditions of the above steps is met, it indicates that the user does not blink and the process of identifying other eye actions is entered.

In the above embodiment, distance change data of upper and lower eyelids in an eye action image collected is obtained and compared with a preset threshold to identify the user's binocular blink action and monocular blink action. Compared with the existing method for judging an eye action by comparing a collected image with a reference image, the eye action identification process according to this embodiment can reduce complexity of the algorithm and reduce the amount of computation of the terminal, can effectively speed up eye action identification performed by the terminal, and improve the efficiency of the control over the terminal.

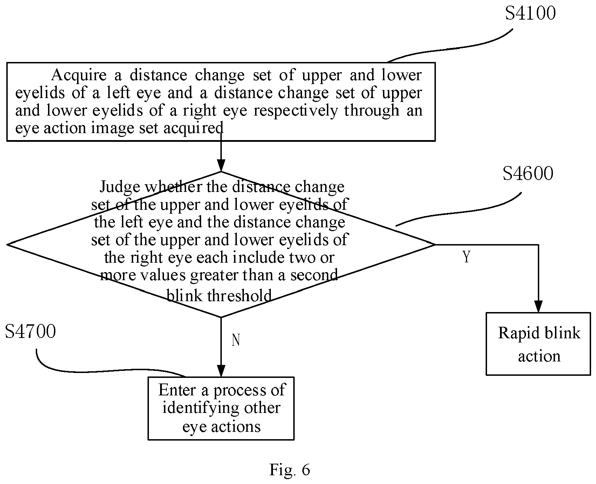

FIG. 6 is a schematic diagram of a rapid blink identification process according to another embodiment of the present application. As shown in FIG. 6, the rapid blink identification process according to the embodiment includes at least following steps.

At step S4100, a distance change set of upper and lower eyelids of a left eye and a distance change set of upper and lower eyelids of a right eye are acquired respectively through an eye action image set acquired.

In both the verification process and the control process, the terminal collects the user's eye actions through a camera or other sensor apparatuses that can be used to sample the eye actions. In this embodiment, the terminal collects the user's eye action image information through a front camera.

A timeout cycle of a timer in the terminal is set to T₁. In an embodiment, T₁ is 1 s, which is a built-in parameter of a terminal program. The setting of the parameter is the same as that in the embodiment in FIG. 5. The timer is initialized and started.

If the user sets rapid blink as a verification action or control action, which involves identification of the rapid blink, the sampling frequency of the front camera may be appropriately increased to obtain more eye action state images. In this embodiment, the front camera samples the user's eye actions at a sampling frequency f₂. In an embodiment, the sampling frequency f₂ is 14 times/s, that is, the user's eye actions are collected 14 times per second, and an eye action image set S₂ is obtained. At the end of each timeout cycle, the image set S₂ includes 14 eye action images of the user.

According to the eye action image set acquired, changes in distances between upper and lower eyelids of the left eye and the right eye of each image in the image set are acquired respectively to form a distance change set of the upper and lower eyelids of the left eye and a distance change set of the upper and lower eyelids of the right eye. Taking the left eye as an example, the distance change set of the upper and lower eyelids is obtained by acquiring the distance between the upper and lower eyelids in each eye action image.

In this embodiment, still taking the left eye as an example, a distance between upper and lower eyelids in each image is first extracted, a distance between the eyelids when the user opens the eyes normally is obtained, and distances between the eyelids in other images are calculated according to the distance between the eyelids when the eyes are opened normally. Such calculation may be simple difference calculation or normalization calculation, or involve other algorithms and generation of a more complex eyelid distance change matrix, with a purpose of generating, according to different eye features of the user, data that can reflect changes in the eye actions. The distance when the eyes are opened normally may be calculated or obtained during user initialization on a terminal device.

A method for acquiring the distance change set of the upper and lower eyelids of the right eye is the same as that for the left eye. Details are not described herein.

At step S4600, it is judged whether the distance change set of the upper and lower eyelids of the left eye and the distance change set of the upper and lower eyelids of the right eye each include at least one value greater than a second blink threshold.

In an embodiment, the distance between the eyelids when the eyes are opened normally is taken as a reference value to acquire a distance between the eyelids when the eyes are not opened normally, i.e., a distance between the eyelids during an eye action, and a ratio of a change in the distance to the reference value is calculated. In the case of blink, the distance between the eyelids may definitely become short, and even the distance between the upper and lower eyelids is zero. However, due to the limitation of an acquisition frequency of the camera, an image in which the distance between the upper and lower eyelids is zero, that is, an image in which two eyes are closed, may not be exactly collected. Therefore, a particular blink threshold is set, and it is judged whether the distance change set of the upper and lower eyelids of the left eye and the distance change set of the upper and lower eyelids of the right eye each include at least one value greater than the blink threshold. It is to be noted that the blink threshold in this embodiment may be the same as or different from the blink threshold set in FIG. 5.

In some examples, if the distance change set of the upper and lower eyelids of the left eye and the distance change set of the upper and lower eyelids of the right eye each include at least two values greater than the blink threshold, it indicates that the two eyes are closed at least twice in a determined cycle, and the eye action is judged as binocular rapid blink. Otherwise, step S4700 is performed.

At step S4700, a process of identifying other eye actions is entered.

If none of the judgment conditions of the above steps is met, it indicates that the user does not blink and the process of identifying other eye actions is entered. It is to be noted that the process of identifying other eye actions may be a binocular blink action identification process, a monocular blink identification process or other non-blink action identification processes.

In the above embodiment, distance change data of upper and lower eyelids in an eye action image collected is obtained and compared with a preset threshold to identify the user's rapid blink action. Compared with the existing method for judging an eye action by comparing a collected image with a reference image, the eye action identification process according to this embodiment can reduce complexity of the algorithm and reduce the amount of computation of the terminal, can effectively speed up eye action identification performed by the terminal, and improve the efficiency of the control over the terminal.

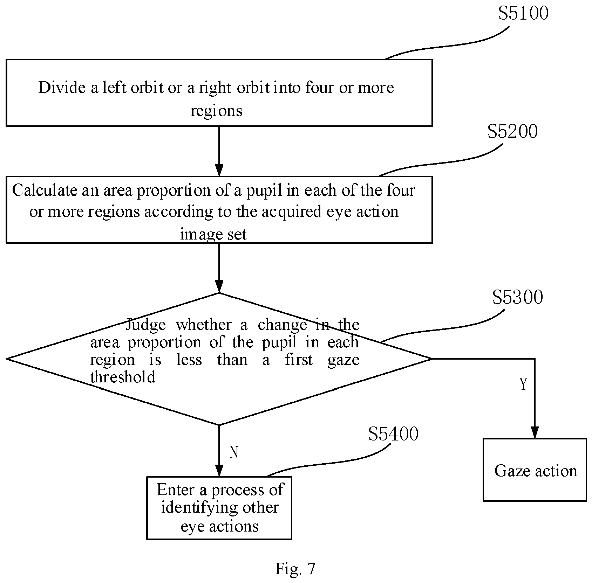

FIG. 7 is a schematic diagram of a gaze identification process according to another embodiment of the present application. As shown in FIG. 7, the gaze identification process according to the embodiment includes at least following steps.

At step S5100, a left orbit or a right orbit is divided into four or more regions.

The purpose of dividing the orbit into multiple regions is to calculate an area proportion of a pupil in each region and then identify a sight diversion direction of the user. Therefore, the division of the orbit into multiple regions can reasonably reflect rotation of the pupil.

In an embodiment, the orbit is divided into upper left, lower left, upper right, and lower right regions by drawing horizontal and vertical lines centered around the pupil of the user looking straight ahead.

At step S5200, an area proportion of a pupil in each of the four or more regions is calculated according to the acquired eye action image set.

Area proportions of the pupil in the above four regions are calculated respectively based on the acquired eye action image set and the orbit division method in the previous embodiment. If the eye action image set includes 10 images, 10 sets of pupil area proportions may be generated, and each set of pupil area proportions includes 4 elements, which are the area proportions corresponding to the upper left, lower left, upper right, and lower right regions respectively.

At step S5300, it is judged whether a change in the area proportion of the pupil in each region is less than a first gaze threshold.

It is to be noted that the change in the area proportion in each region is intended to reflect rotation of the pupil. Therefore, during practical application of the method, a determined reference value may be selected as a reference to calculate the change in the area proportion, and a relative area change between different images may also be calculated. Those having ordinary skill in the art should know that any calculation method that can reflect the change in the area proportion of the rotation of the pupil falls into the protection scope of this step.

In this embodiment, area proportions of the pupil in the four regions when the user looks directly are pre-acquired as reference values. Then, during actual calculation, a proportion of a pupil region in each image in the eye action image set is acquired, and then a change in the area proportion of the pupil in each region is calculated according to the reference value. The user's sight cannot remain absolutely still every time. In consideration of this, in gaze identification, if the change in the area proportion in each region is less than the first gaze threshold, the eye action is judged as a gaze action.

At step S5400, a process of identifying other eye actions is entered.

If not the change in the area proportion in each region is less than the first gaze threshold, it indicates that the pupil rotates and exceeds the threshold. Therefore, the eye action is not identified as a gaze action, and the process of identifying other eye actions is entered.

In the above embodiment, the user's gaze action is identified by obtaining the area proportion of the pupil in each region in the collected eye action image and calculating a change in the area proportion in each region. Compared with the existing method for judging an eye action by comparing a collected image with a reference image, the eye action identification process according to this embodiment can reduce complexity of the algorithm and reduce the amount of computation of the terminal, effectively speed up eye action identification performed by the terminal, and improve the efficiency of the control over the terminal.

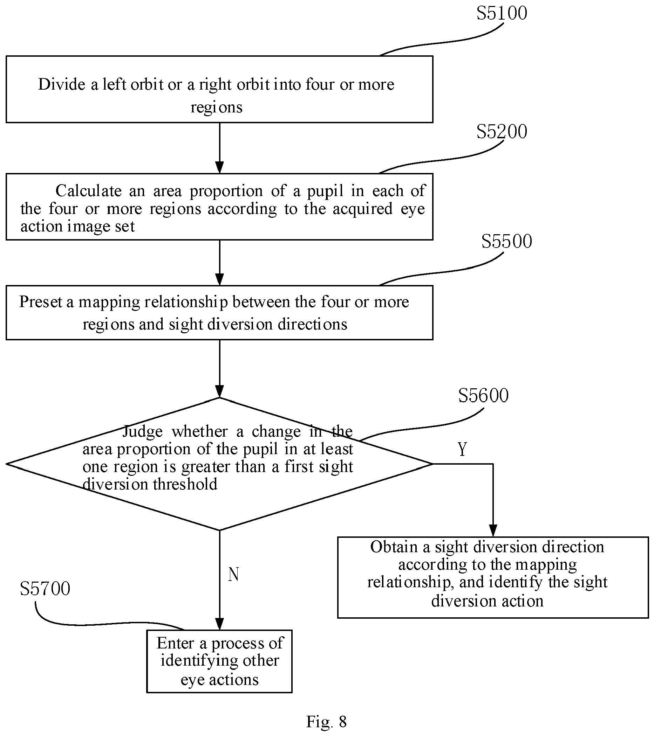

FIG. 8 is a schematic diagram of a sight diversion identification process according to another embodiment of the present application. As shown in FIG. 8, the sight diversion identification process according to the embodiment includes at least following steps.

At step S5100, a left orbit or a right orbit is divided into four or more regions.

In an embodiment, the orbit is divided into upper, lower, left, and right regions by drawing lines at angles of 45 degrees to horizontal and vertical directions centered around the pupil of the user looking straight ahead.

At step S5200, an area proportion of a pupil in each of the four or more regions is calculated according to the acquired eye action image set.

Area proportions of the pupil in the above four regions are calculated respectively based on the acquired eye action image set and the orbit division method in the previous embodiment. If the eye action image set includes 10 images, 10 sets of pupil area proportions may be generated, and each set of pupil area proportions includes 4 elements, which are the area proportions corresponding to the upper, lower, left, and right regions respectively.

At step 5500, a mapping relationship between the four or more regions and sight diversion directions is preset.

The establishment of the mapping relationship between sight diversion directions and regions, on the one hand, can determine a diversion direction by calculating changes in the area proportions of the pupil in different regions, and on the other hand, can determine a specific location of the sight on a display screen of the terminal according to other parameters such as a sight diversion direction and a distance between the eyes and a camera of the terminal, so as to control different positions on the display screen of the terminal.

In this embodiment, the upper, lower, left, and right regions correspond to up, down, left, and right of the sight diversion direction respectively.

At step 5600, it is judged whether a change in the area proportion of the pupil in at least one region is greater than a first sight diversion threshold.

In this embodiment, for example, if the change in the area proportion of the pupil in the left region is greater than the sight diversion threshold, it indicates that the pupil rotates to the left. It may be judged according to the mapping relationship between regions and sight diversion directions in step 5500 that the pupil rotates to the left. That is, the user tends to divert the sight to the left.

Based on the same principle, the sight diversion identification process in this embodiment can identify sight diversion in other directions, such as looking up and looking down. The eye action may correspond to different terminal operations in different application scenarios, such as scrolling up and down in web browsing.

At step 5700, a process of identifying other eye actions is entered.

If none of the changes in the area proportion is greater than the first sight diversion threshold, it indicates that the pupil hardly rotates. Therefore, the eye action is not identified as a sight diversion action, and the process of identifying other eye actions is entered.

In the above embodiment, the user's sight diversion action is identified by obtaining the area proportion of the pupil in each region in the collected eye action image and calculating a change in the area proportion in each region. Compared with the existing method for judging an eye action by comparing a collected image with a reference image, the eye action identification process according to this embodiment can reduce complexity of the algorithm and reduce the amount of computation of the terminal, effectively speed up eye action identification performed by the terminal, and improve the efficiency of the control over the terminal.

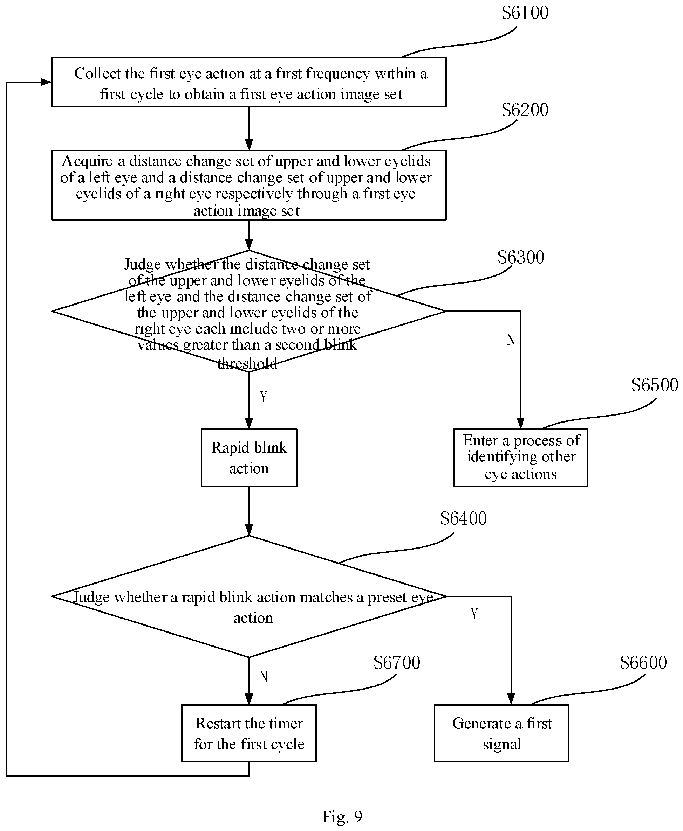

FIG. 9 is a schematic flowchart of the terminal control method according to another embodiment of the present application. As shown in FIG. 9, the terminal control method according to the embodiment includes at least following steps.

At step S6100, the first eye action is collected at a first frequency within a first cycle to obtain a first eye action image set.

In an embodiment, a timeout cycle T₃ of a timer in the terminal is set to 1 s, the terminal has a front camera, and a sampling frequency f₃ of the front camera is 10 times/s. That is, the user's eye actions are collected 10 times per second, to form an eye action image set S₃ including 10 eye action images.

At step S6200, a distance change set of upper and lower eyelids of a left eye and a distance change set of upper and lower eyelids of a right eye are acquired respectively through a first eye action image set.

In this embodiment, a distance between the eyelids when the user opens the eyes normally is taken as a reference distance to normalize distances between eyelids in 10 images, and a change in the distance between the eyelids in each image relative to a standard distance is calculated according to normalization results to generate a distance change set of the upper and lower eyelids.

At step S6300, it is judged whether the distance change set of the upper and lower eyelids of the left eye and the distance change set of the upper and lower eyelids of the right eye each include two or more values greater than a first blink threshold.

In this embodiment, since the distances between the upper and lower eyelids are normalized, the distance change sets of the upper and lower eyelids of the left eye and the right eye each should include 10 elements. Each element is a normalized representation of the change in the distance between the eyelids at sampling time. In this embodiment, the blink threshold is preset to 0.8. If the distance change sets of the upper and lower eyelids of the left eye and the right eye each include two or more elements greater than 0.8, the eye action is judged as binocular rapid blink.

At step S6400, it is judged whether a rapid blink action matches a preset eye action.

In some embodiments, in the eye action verification process, the user presets the verification action as binocular rapid blink. If binocular rapid blink is identified in the previous step, it indicates that the identified action matches the preset eye action, and step S6600 is performed.

At step S6500, a process of identifying other eye actions is entered.

In some embodiments, in the eye action verification process, the user presets the verification action as left-eye blink. If binocular rapid blink is identified in the previous step, it indicates that the identified action does not match the preset eye action, and step S6700 is performed.

At step S6600, a first signal is generated.

At step S6700, the timer is restarted for the first cycle.

Those having ordinary skill in the art should know that the binocular blink, left-eye blink, right-eye blink, binocular rapid blink, gaze, and sight diversion identification processes involved in the above embodiments all can be used as verification actions to be applied to the eye action verification process.

In some examples, in the verification stage, some eye actions that are not easy to be misoperated by users should be preset as verification actions, such as binocular rapid blink or monocular blink.

In the above embodiment, the user's blink action can be easily and rapidly identified by collecting a distance between eyelids in an image and calculating a change in the distance between the eyelids, which has lower computational complexity and higher terminal control and execution efficiency than the comparison between images in the existing method.

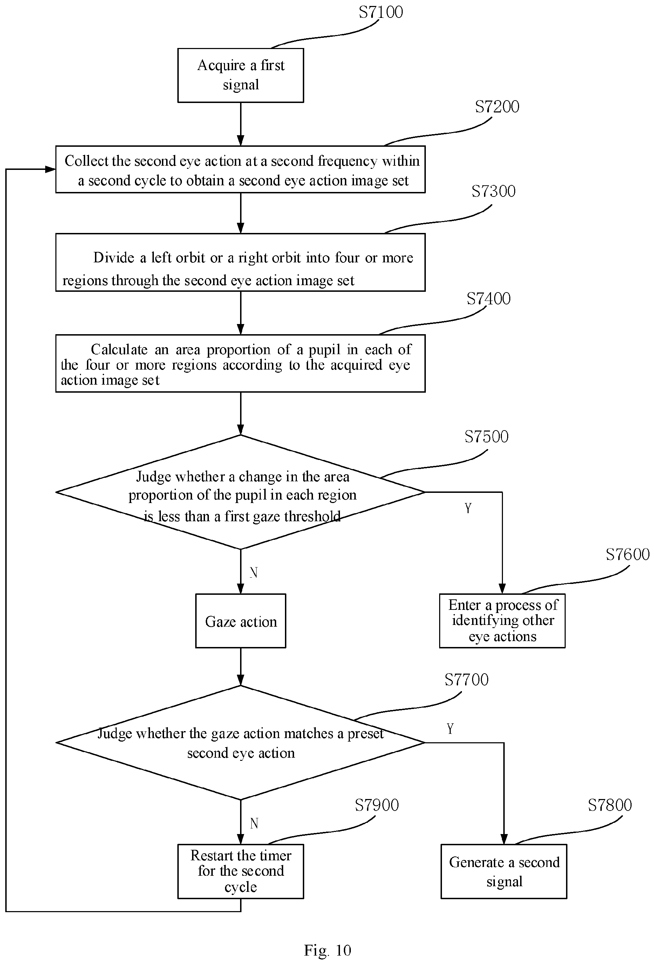

FIG. 10 is a schematic flowchart of the terminal control method according to another embodiment of the present application. As shown in FIG. 10, the terminal control method according to the embodiment includes at least following steps.

At step S7100, a first signal is acquired.

In this embodiment, terminal control in an eye action control stage may be performed based on the embodiment in FIG. 9. Therefore, the first signal can be acquired only after the eye action verification process is passed.

At step S7200, the second eye action is collected at a second frequency within a second cycle to obtain a second eye action image set.

In this embodiment, the timeout cycle T₃ and the sampling frequency f₃ in the embodiment in FIG. 9 are followed.

At step S7300, a left orbit or a right orbit is divided into four or more regions.

In this embodiment, the orbit is divided into upper, lower, left, and right regions by drawing lines at angles of 45 degrees to horizontal and vertical directions centered around the pupil of the user looking straight ahead.

At step S7400, an area proportion of a pupil in each of the four or more regions is calculated according to the acquired eye action image set.

Area proportions of the pupil in the above four regions are calculated respectively based on the acquired eye action image set and the orbit division method in the previous embodiment. If the eye action image set includes 10 images, 10 sets of pupil area proportions may be generated, and each set of pupil area proportions includes 4 elements, which are the area proportions corresponding to the upper, lower, left, and right regions respectively.

At step S7500, it is judged whether a change in the area proportion of the pupil in each region is less than a first gaze threshold.

If the area proportions of the pupil in the upper, lower, left, and right regions are all 20% when the user looks directly, the area proportions of the pupil in the upper, lower, left, and right regions are still 20% when the user gazes, that is, the pupil hardly rotates. That is, a change in the area proportion in each region is 0. If the first gaze threshold is preset to 1%, the changes in the area proportions of the pupil in the four regions are all less than the first gaze threshold 1%, so the gaze action is identified.

In some examples, a specific location of the sight on the display screen of the terminal can be calculated in combination with parameters such as the area proportions of the pupil in different regions and a distance between the pupil and an image collection apparatus of the terminal, so as to realize subsequent operations such as screen capture and enlargement.

At step S7600, a process of identifying other eye actions is entered.

If the user does not gaze or if the gaze action is not standard (the area proportion of the pupil in one region changes by more than 1%), the process of identifying other eye actions is entered.

At step S7700, it is judged whether the gaze action matches a preset second eye action.

In some embodiments, in the eye action control process, for example, the terminal is used to browse web pages, and the user presets the gaze action as enlarging content of a current web page. If the gaze action is identified in step S7500, it indicates that the identified action matches the preset eye action, and step S7800 is performed. If the gaze action is not identified in step S7500, it indicates that the identified action does not match the preset eye action, and step S7900 is performed.

At step S7800, a second signal is generated.

At step S7900, the timer is restarted for the second cycle.

Those having ordinary skill in the art should know that, depending on different terminal usage scenarios, different eye control actions or even a combination of the above eye actions can be set by the user or built in the terminal.

In the above embodiment, the user's gaze or sight diversion action can be easily and rapidly identified by calculating area proportions of the pupil in different regions in the image and changes in the area proportions of the pupil in different regions, which has lower computational complexity and higher terminal control and execution efficiency than the comparison between images in the existing method.

In accordance with another aspect of the present application, an embodiment provides a terminal control apparatus configured to perform the terminal control method described above.

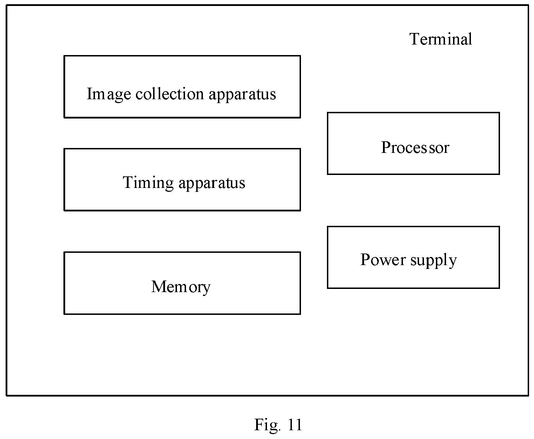

In accordance with another aspect of the present application, an embodiment provides a terminal, as shown in FIG. 11, including: an image collection apparatus configured to collect an eye action image; a timing apparatus configured to determine a collection cycle of the eye action image; a memory configured to store a computer program; a processor configured to execute the computer program, where the computer program can implement the terminal control method described above; and a power supply configured to power the terminal.

In accordance with another aspect of the present application, an embodiment further provides a computer-readable storage medium storing computer-executable instructions, where the computer-executable instructions are configured to perform the method described above.

According to the embodiment of the present application, before the terminal formally identifies and executes an eye action instruction of the user, an eye action verification step is preset, and the terminal performs an operation according to a subsequent eye action instruction only when eye action verification is passed, which reduces wrong operations caused by the user's wrong eye actions and improves the efficiency of the user's control over the terminal. In some examples, a change in a distance between eyelids is also calculated to identify a variety of blink actions, and a change in a proportion of a pupil region is calculated to identify a gaze action or a sight diversion action, which can reduce computational complexity of the terminal, has higher execution efficiency than the eye action identification by image comparison, and improves the user's experience.

The apparatus embodiments described above are only illustrative. The units described as separate parts may or may not be physically separate, that is, may be located in one place, or may be distributed over multiple network units. Some or all of the modules may be selected according to actual needs to achieve the objectives of the schemes of the embodiments.

Those having ordinary skill in the art may understand that all or some of the steps in the method and functional modules/units in the system and the apparatus disclosed above may be implemented as software, firmware, hardware and appropriate combinations thereof. In a hardware implementation, the division between the functional modules/units mentioned in the above description does not necessarily correspond to the division of physical components. For example, one physical component may have multiple functions, or one function or step may be jointly performed by several physical components. Some or all of the physical components may be implemented as software executed by a processor such as a central processing unit, a digital signal processor or a microprocessor, or may be implemented as hardware, or may be implemented as an integrated circuit such as an application-specific integrated circuit. Such software may be distributed on a computer-readable medium, which may include a computer storage medium (or non-transitory medium) and a communication medium (or a transitory medium). As is well known to those having ordinary skill in the art, the term "computer storage medium" includes volatile and nonvolatile, removable and non-removable media implemented in any method or technology for storing information (such as computer-readable instructions, data structures, program modules, or other data). The computer storage medium includes, but is not limited to, a random access memory (RAM), a read-only memory (ROM), an electrically erasable programmable read-only memory (EEPROM), a flash memory or other memory technologies, a compact disc read-only memory (CD-ROM), a digital versatile disk (DVD) or other optical storage, magnetic cassette, magnetic tape, magnetic disk storage or other magnetic storage apparatuses, or any other media that can be configured for storing desired information and can be accessed by a computer. Besides, as is well known to those having ordinary skill in the art, the communication medium typically includes computer-readable instructions, data structures, program modules or other data in a modulated data signal such as a carrier wave or other transport mechanisms, and may include any information delivery medium. The mobile terminal device may be a mobile phone, a tablet computer, a laptop notebook, a handheld computer, a vehicle-mounted terminal, a wearable device, a super mobile personal computer, a netbook, a personal digital assistant, customer premise equipment (CPE), a UFI (wireless hotspot devices), or the like, which is not limited in the implementation schemes of the present application.

The above is a detailed description of some embodiments of the present application, but the present application is not limited to the above implementations. Those having ordinary skill in the art may also make various equivalent transformations or replacements without departing from the spirit of the present application, which are included in the scope defined by the claims of the present application.

## Claims

1. A terminal control method, comprising:
acquiring a first eye action, and generating a first signal after a verification in response to the first eye action matching at least one of preset first eye actions;
acquiring a second eye action and generating a second signal after acquiring the first signal; and
performing an operation according to the second signal.

2. The method of claim 1, wherein acquiring a first eye action, and generating a first signal after a verification in response to the first eye action matching at least one of preset first eye actions comprises:
collecting the first eye action at a first frequency within a first cycle to obtain a first eye action image set; and
identifying the first eye action through the first eye action image set, and generating the first signal after the verification in response to the first eye action matching at least one of the preset first eye actions.

3. The method of claim 1, wherein acquiring a second eye action and generating a second signal comprises:
collecting, after acquiring the first signal, the second eye action at a second frequency within a second cycle to obtain a second eye action image set; and
identifying the second eye action through the second eye action image set, and generating the second signal in response to the second eye action matching at least one of preset second eye actions.

4. The method of claim 2 or 3, wherein identifying the eye action comprises:
identifying a blink action through a change in a distance between eyelids.

5. The method of claim 2 or 3, wherein identifying the eye action comprises:
identifying a gaze action or a sight diversion action through a change in a proportion of a pupil region.

6. The method of claim 4, wherein identifying a blink action through a change in a distance between eyelids comprises:
acquiring a distance change set of upper and lower eyelids of a left eye and a distance change set of upper and lower eyelids of a right eye respectively through an eye action image set; and
identifying a binocular blink action in response to the distance change set of the upper and lower eyelids of the left eye and the distance change set of the upper and lower eyelids of the right eye each comprising at least one value greater than a first blink threshold.

7. The method of claim 4, wherein identifying a blink action through a change in a distance between eyelids further comprises:
acquiring a distance change set of upper and lower eyelids of a left eye and a distance change set of upper and lower eyelids of a right eye respectively through an eye action image set; and
identifying a monocular blink action in response to the distance change set of the upper and lower eyelids of the left eye comprising at least one value greater than a first threshold and all values in the distance change set of the upper and lower eyelids of the right eye being less than the first threshold, or in response to the distance change set of the upper and lower eyelids of the right eye comprising at least one value greater than the first threshold and all values in the distance change set of the upper and lower eyelids of the left eye being less than the first threshold.

8. The method of claim 4, wherein identifying a blink action through a change in a distance between eyelids further comprises:
acquiring a distance change set of upper and lower eyelids of a left eye and a distance change set of upper and lower eyelids of a right eye respectively through an eye action image set; and
identifying a rapid blink action in response to the distance change set of the upper and lower eyelids of the left eye and the distance change set of the upper and lower eyelids of the right eye each comprising two or more values greater than a second blink threshold.

9. The method of claim 5, wherein identifying a gaze action or a sight diversion action through a change in a proportion of a pupil region comprises:
dividing a left orbit or a right orbit into four or more regions;
calculating an area proportion of a pupil in each of the four or more regions according to the acquired eye action image set; and
calculating and identifying the gaze action or the sight diversion action according to a change in the area proportion in each region.

10. The method of claim 9, wherein calculating and identifying the gaze action according to a change in the area proportion in each region comprises:
identifying the gaze action in response to the change in the area proportion of the pupil in each region being less than a first gaze threshold.

11. The method of claim 9, wherein calculating and identifying the sight diversion action according to a change in the area proportion in each region comprises:
presetting a mapping relationship between the four or more regions and sight diversion directions; and
obtaining a sight diversion direction according to the mapping relationship and identifying the sight diversion action in response to the change in the area proportion of the pupil in at least one of the regions being greater than a first sight diversion threshold.

12. A terminal control apparatus configured to perform the terminal control method of any one of claims 1 to 11.

13. A terminal, comprising:
an image collection apparatus configured to collect an eye action image;
a timing apparatus configured to determine a collection cycle of the eye action image;
a memory configured to store a computer program which, when executed by a processor, causes the processor to perform the method of any one of claims 1 to 11;
a processor configured to perform the method of any one of claims 1 to 11 in response to executing the computer program; and
a power supply configured to power the terminal.

14. A computer-readable storage medium storing computer-executable instructions which, when executed by a processor, cause the processor to perform the method of any one of claims 1 to 11.
